# EUROPÄISCHE PATENTSCHRIFT

(11) **EP 1 144 151 B1**
(45) Veröffentlichungstag und Bekanntmachung des Hinweises auf die Patenterteilung: **02.01.2004**
(21) Anmeldenummer: 00900448.2
(22) Anmeldetag: 14.01.2000
(51) Int. Cl.: B23K 9/10

(54) **FERNREGLEREINHEIT FÜR EIN SCHWEISSGERÄT ODER EINE STROMQUELLE**
REMOTE REGULATION UNIT FOR A WELDING APPARATUS OR A POWER SOURCE
UNITE DE TELEREGULATION POUR UN APPAREIL DE SOUDAGE OU UNE SOURCE DE COURANT

(30) Priorität: 15.01.1999 AT 5299
(43) Veröffentlichungstag der Anmeldung: 17.10.2001
(73) Patentinhaber: Fronius International GmbH, 4643 Pettenbach (AT)
(72) Erfinder: BRUNNER, Michael, A-8055 Seiersberg (AT); ZAUNER, Michael, A-4072 Alkoven (AT); FRIEDL, Helmut, A-4621 Sipbachzell (AT); OBERZAUCHER, Friedrich, A-4600 Wels (AT)
(74) Vertreter: Secklehner, Günter, Dr.
(86) Internationale Anmeldenummer: PCT/AT2000/000008
(87) Internationale Veröffentlichungsnummer: WO 2000/041835

(56) Entgegenhaltungen:
- EP-A- 0 575 082
- EP-A- 0 622 768
- WO-A-98/25726
- DE-A- 4 121 740
- US-A- 4 266 114
- US-A- 5 039 835
- US-A- 5 276 305
- PATENT ABSTRACTS OF JAPAN vol. 010, no. 189 (M-494), 3. Juli 1986 (1986-07-03) & JP 61 033768 A (SHINDAIWA KOGYO KK), 17. Februar 1986 (1986-02-17)
- PATENT ABSTRACTS OF JAPAN vol. 016, no. 458 (M-1315), 24. September 1992 (1992-09-24) & JP 04 162966 A (DENYOO KK), 8. Juni 1992 (1992-06-08)

## Beschreibung

Die Erfindung bezieht sich auf eine Verfahren für einen Datenaustausch sowie auf eine Fernreglereinheit, wie sie im Anspruch 1 und 7 beschrieben sind.

Aus der US 4,226,114 A ist eine Fernreglereinheit sowie ein Verfahren für einen Datenaustausch bekannt, bei dem von der Fernreglereinheit zu dem Schweißgerät über die Schweißleitungen ein serieller Datentransfer durchgeführt wird. Hierzu ist in der Fernreglereinheit zwischen zwei Kontaktflächen, insbesondere zwischen zwei Eingängen, ein Schaltelement und seriell dazu ein Widerstand angeordnet, Das Schaltelement wird von einer Logikeinheit angesteuert, sodaß durch Schließen und Öffnen entsprechende Strompegel an das Schweißgerät übersendet werden. Nachteilig ist hierbei, daß mit einer derartigen Fernreglereinheit nur ein einseitiger Datentransfer, nämlich von der Fernreglereinheit zum Schweißgerät, durchgeführt werden kann. Weiters muß für die Erkennung des Datentransfers, insbesondere der erzeugten Pulse, in dem Schweißgerät eine eigene Erkennungsvorrichtung angeordnet werden, über die die Anzahl der Pulse festgestellt werden kann. Dadurch können nur bestimmte Fernreglereinheiten, die auf die Erkennungsvorrichtung abgestimmt sind, eingesetzt werden.

Aus der WO 98/25726 A ist ein Verfahren für ein Rorschweißgerät bekannt, bei dem ein bidirektionaler Datenaustausch zwischen zwei Komponenten über eine Leitung durchgeführt wird. Hierbei werden die zu übertragenden Daten über eine Modulationsvorrichtung auf die Leitung aufmoduliert bzw. die aufmodulierten Daten über die Modulationsvorrichtung demoduliert. Nachteilig ist hierbei, daß ein sehr hoher technischer Aufwand für die Datenübertragung notwendig ist. Derartige Übertragungsverfahren sind auch gegenüber äußeren Ströeinflüssen sehr empfindlich.

Weiters sind aus der DE 41 21 740 A, der US 5,039,835 A und der EP 0 622 768 A Fernreglereinheiten bekannt, bei denen wiederum nur ein einseitiger Datentransfer, also von der Fernreglereinheit zum Schweißgerät durchgeführt werden kann. Aus der JP 61 033 768 und der JP 04 162 966 A sind Fernregler bekannt, bei denen die Datenübertragung durch Frequenzmodulation durchgeführt wird.

Es ist bereits eine Lichtbogenschweißmaschine bekannt - gemäß DE 29 04 458 A1 - bei der ein regelbarer Leistungsteil zur Schweißstromerzeugung über eine Steuervorrichtung geregelt werden kann. Dazu ist der Leistungsteil über je ein Schweißstromkabel mit einer Elektrodenhalterung und dem Werkstück verbunden und mit einer der Steuervorrichtung zugeordneten, manuell oder über eine Fernreglereinheit einstellbare Einstellvorrichtung ausgestattet. Die Fernreglereinheit ist zwischen dem Werkstück und dem Elektrodenhalter, insbesondere einem Schweißbrenner, angeordnet und umfaßt eine manuell betätigbare Einstellvorrichtung für den Schweißstrom. Dieser Fernreglereinheit ist in der Steuervorrichtung des Schweißgerätes eine Erfassungsvorrichtung zugeordnet. Über die Fernreglereinheit wird die Stromaufnahme der Fernreglereinheit verändert, wodurch die Leistungsaufnahme erhöht wird. Die Veränderung des Stromflusses in der Fernreglereinheit wird mittels der Erfassungsvorrichtung erkannt und dementsprechend der Soll-Wert für den Schweißstrom verändert. Nachteilig ist hierbei, daß durch äußere Einflüsse Widerstandsveränderungen im Regelkreis ausgelöst werden können, die zu einer Leerlaufstromerhöhung und somit zu einer Falscheinstellung des Soll-Wertes für das Schweißgerät führen kann.

Weiters ist bereits eine Lichtbogenschweißmaschine mit einem einstellbaren Leistungsteil bekannt - gemäß DE 33 29 216 A1 - bei der eine Fernreglereinheit zwischen die leitenden Flächen eines Werkstückes und einer Schweißelektrode eingesetzt wird. Entsprechend der Reihenfolge der leitenden Fläche und der Polarität vom Werkstück und der Schweißelektrode wird der Schweißspannung eine höhere oder niedrigere Frequenz der Schweißspannung überlagert. Eine Steuervorrichtung im Schweißgerät erhöht oder erniedrigt den Schweißstrom so lange der Regelkreis bzw. Stromkreis über das Leistungsteil geschlossen ist. Nachteilig ist hierbei, daß der Nachstellvorgang bzw. der Einstellvorgang mehrmals wiederholt werden muß, um durch zwischenzeitliche Schweißversuche festellen zu können, ob der neu eingestellte Soll-Wert des Schweißstromes dem gewünschten Wert entspricht.

Der vorliegenden Erfindung liegt die Aufgabe zugrunde, eine Fernreglereinheit zu schaffen, bei der eine exakte Ferneinstellung des Soll-Wertes eines Schweißparameters von einem Schweißgerät in einfacher Form möglich ist.

Diese Aufgabe der Erfindung wird durch die Merkmale im Kennzeichenteil des Anspruches 1 gelöst. Vorteilhaft ist hierbei, daß durch einen seriellen Datenaustausch in Form eines Datenprotokolles beliebig viele Daten übertragen werden können und somit eine Vielzahl von unterschiedlichen Schweißparametern mit nur einer Fernreglereinheit verändert werden können. Ein weiterer Vorteil liegt darin, daß durch einen bidirektionalen Datenaustausch einzelne Schweißparameter, insbesondere deren Soll-Werte vom Schweißgerät bzw. von der Stromquelle abgefragt werden können, die anschließend an der Anzeigevorrichtung der Fernreglereinheit vom Benutzer abgelesen und/oder verändert werden kann.

Weitere vorteilhafte Maßnahmen sind in den Ansprüchen 2 bis 6 beschrieben. Die damit erzielbaren Vorteile sind der detaillierten Figurenbeschreibung zu entnehmen.

Weiters wird diese Aufgabe der Erfindung auch durch die Merkmale im Kennzeichenteil des Anspruches 7 gelöst. Vorteilhaft ist hierbei, daß durch eine derartige Ausbildung der Femreglereinheit eine serielle Datenübertragung durchgeführt werden kann, wodurch erreicht wird, daß beliebig viele Daten übertragen werden können. Ein weiterer Vorteil liegt darin, daß in einfacher Form unterschiedliche Schweißparameter durch Aktivieren eines Einstellorganes an der Fernreglereinheit ausgewählt werden können, wobei über die Femreglereinheit der Benutzer die Möglichkeit hat, zu jedem Schweißparameter den eingestellten Soll-Wert zu verändern, ohne das dabei eine Einstellung an der Ein- und/oder Ausgabevorrichtung am Schweißgerät durchgeführt werden muß.

Bei einer Anwendung einer derartigen Fernreglereinheit wird in vorteilhafter Weise erreicht, daß zwischen der Fernreglereinheit und dem Schweißgerät ein bidirektionaler Datenaustausch durchgeführt werden kann, sodaß beispielsweise bei einer Fehleinstellung des Benutzers diese von der Steuervorrichtung des Schweißgerätes erkannt werden kann, worauf von der Steuervorrichtung durch Aussendung eines entsprechenden Datenprotokolles der Benutzer über die Fernreglereinheit gewarnt werden kann.

Weitere vorteilhafte Ausbildungen sind in den Ansprüchen 8 bis 17 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:
- Fig. 1: einen schematischen Aufbau eines Schweißgerätes in vereinfachter Darstellung;
- Fig. 2: ein Blockschaltbild einer erfindungsgemäßen Fernreglereinheit für ein Schweißgerät oder eine Stromquelle in vereinfachter, schematischer Darstellung;
- Fig. 3: ein Diagramm eines Datenprotokolls von der Fernreglereinheit zum Schweißgerät, in vereinfachter, schematischer Darstellung;
- Fig. 4: ein weiteres Diagramm eines Datenprotokolls von dem Schweißgerät zur Fernreglereinheit, in vereinfachter, schematischer Darstellung.

Einführend sei festgehalten, daß in den Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

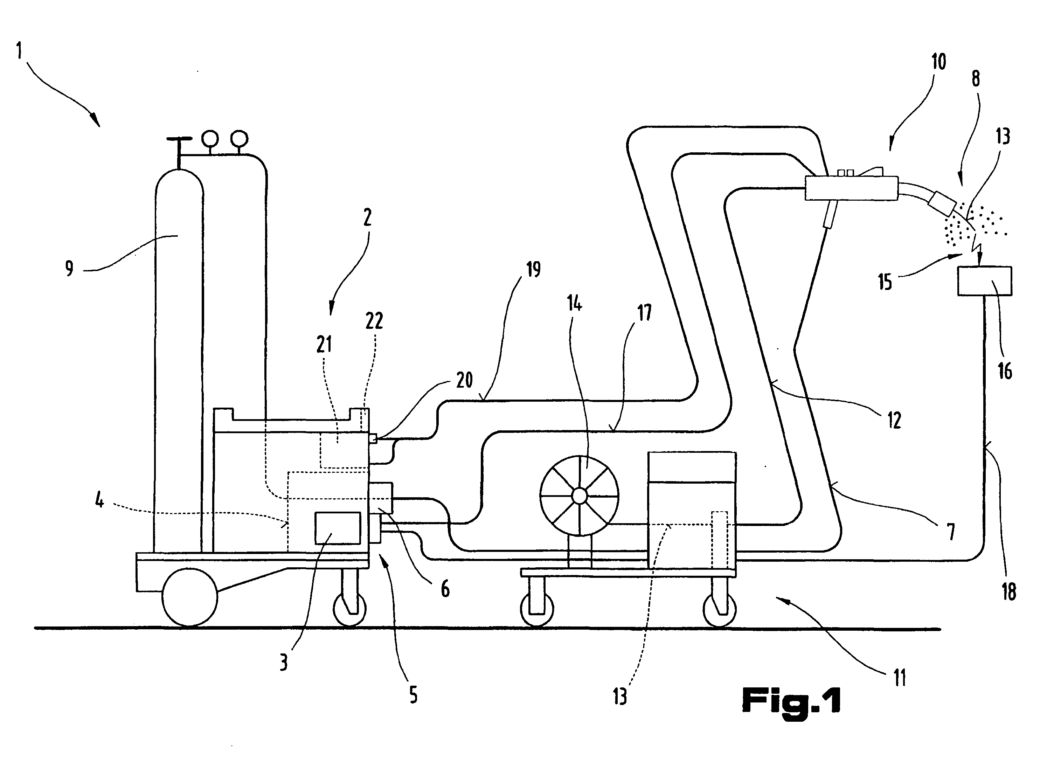

In Fig. 1 ist ein Schweißgerät 1 für verschiedenste Schweißverfahren, wie z.B. MIG/MAG-Schweißen bzw. TIG-Schweißen oder Elektroden-Schweißverfahren gezeigt.

Das Schweißgerät 1 umfaßt eine Stromquelle 2 mit einem Leistungsteil 3, eine Steuervorrichtung 4 und ein dem Leistungsteil 3 bzw. der Steuervorrichtung 4 zugeordnetes Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Schweißdraht 13 von einer Vorratstrommel 14 in den Bereich des Schweißbrenners 10 zugeführt wird. Der Strom zum Aufbauen eines Lichtbogens 15 zwischen dem Schweißdraht 13 und einem Werkstück 16 wird über eine Versorgungsleitung 17 vom Leistungsteil 3 der Stromquelle 2 dem Schweißbrenner 10 bzw. dem Schweißdraht 13 zugeführt, wobei das zu verschweißende Werkstück 16 über eine weitere Versorgungsleitung 18 ebenfalls mit dem Schweißgerät 1 verbunden ist und somit über den Lichtbogen 15 ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Wasserbehälter 21 verbunden werden, wodurch bei der Inbetriebnahme des Schweißbrenners 10 der Kühlkreislauf 19 von der Steuervorrichtung 4 gestartet werden kann und somit eine Kühlung des Schweißbrenners 10 bzw. des Schweißdrahtes 13 bewirkt wird.

Weiters weist das Schweißgerät 10 eine Ein- und/oder Ausgabevorrichtung 22 auf, über die die unterschiedlichsten Schweißparameter bzw. Betriebsarten des Schweißgerätes 1 eingestellt werden können. Dabei werden die über die Ein- und/oder Ausgabevorrichtung 22 eingestellten Schweißparameter an die Steuervorrichtung 4 weitergeleitet und von dieser werden anschließend die einzelnen Komponenten des Schweißgerätes 1 angesteuert.

Selbstverständlich ist es möglich, daß nicht, wie in dem dargestellten Ausführungsbeispiel der Schweißbrenner 10 über einzelne Leitungen mit den einzelnen Komponenten, insbesondere mit dem Schweißgerät 1 bzw. dem Drahtvorschubgerät 11, verbunden wird, sondern daß diese einzelnen Leitungen in einem gemeinsamen Schlauchpaket zusammengefaßt sind und an dem Schweißbrenner 10 angeschlossen werden.

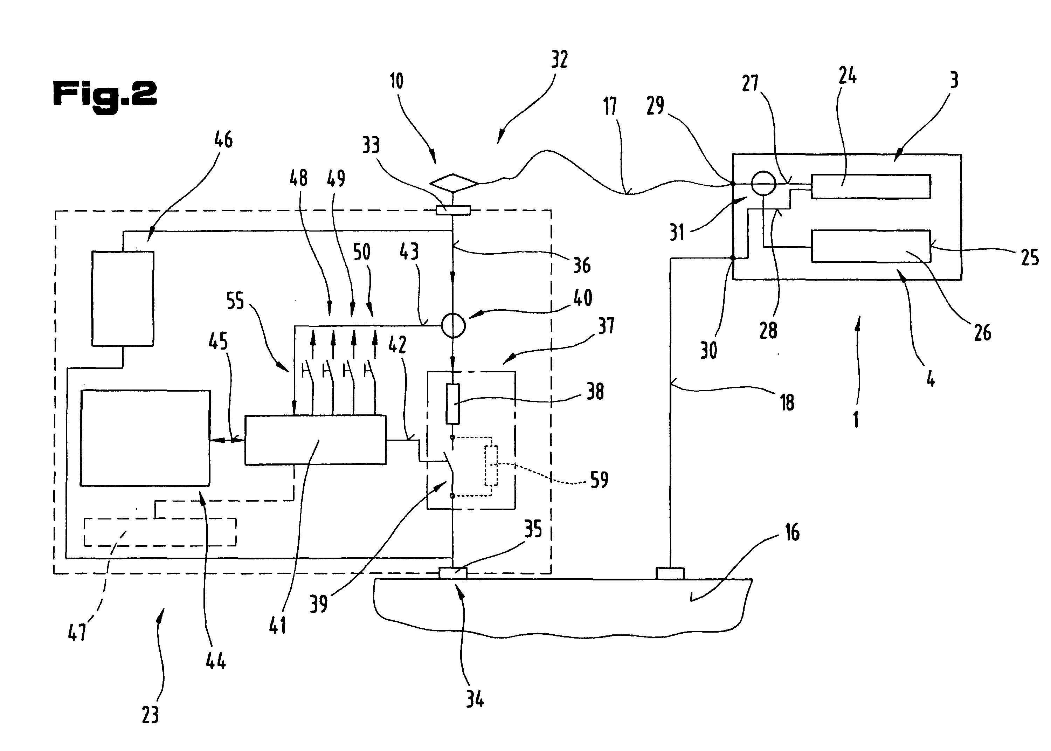

In Fig. 2 ist ein schematisches Blockschaltbild des Schweißgerätes 1 und einer erfindungsgemäßen Fernreglereinheit 23 gezeigt.

Das Schweißgerät 1 ist schematisch durch das Leistungsteil 3 und die Steuervorrichtung 4 dargestellt, wobei das Leistungsteil 3 beispielsweise durch eine Inverterstromquelle 24 gebildet ist. Zum Steuern bzw. Regeln der Inverterstromquelle 24 ist das Leistungsteil 3 beispielsweise über eine Datenbus 25, insbesondere über einen digitalen Datenbus, mit der Steuervorrichtung 4 verbunden. Die Steuervorrichtung 4 kann beispielsweise durch eine Mikroprozessorsteuerung 26 gebildet werden. Die einzelnen Komponenten des Schweißgerätes 1, nämlich die Inverterstromquelle 24 und die Mikroprozessorsteuerung 26, können durch jede zum Stand der Technik zählende Inverterstromquellen 24 und Mikroprozessorsteuerung 26 gebildet werden, wodurch eine detaillierte Darstellung dieser Komponenten der Einfachheit halber nicht durchgeführt wurde. Selbstverständlich ist es möglich, daß an der Steuervorrichtung 4, insbesondere an der Mikroprozessorsteuerung 26, weitere Komponenten des Schweißgerätes 1, wie beispielsweise die Ein- und/oder Ausgabevorrichtung 22 sowie das Drahtvorschubgerät 11 usw., wie in Fig. 1 beschrieben, angeschlossen sind, d.h., daß über eine Datenverbindung diese Komponenten mit der Steuervorrichtung 4 verbunden werden, wodurch ein vollständiger Aufbau des Schweißgerätes 1 erreicht wird.

Bei dem dargestellten Blockschaltbild des Schweißgerätes 1 ist das Leistungsteil 3 über Leitungen 27, 28 mit Anschlußbuchsen 29, 30 verbunden. Diese Anschlußbuchsen 29, 30 sind derartig ausgebildet, daß, wie es aus dem Stand der Technik bekannt ist, ein Schlauchpaket an das Schweißgerät 1 angeschlossen werden kann. An diese Anschlußbuchsen 29, 30 werden nunmehr die Versorgungsleitungen 17, 18 für den Schweißbrenner 10 und das Werkstück 16 angeschlossen. In dem dargestellten Ausführungsbeispiel ist der Schweißbrenner 10 und das Werkstück 16 schematisch dargestellt. Es ist jedoch ersichtlich, daß über die Versorgungsleitungen 17, 18 ein Stromkreis mit dem Leistungsteil 3 gebildet werden kann.

Damit eine Regelung bzw. Steuerung des Leistungsteils 3 von der Steuervorrichtung 4 erfolgen kann, ist im Schweißgerät 1 eine Erfassungsvorrichtung 31 angeordnet. Diese Erfassungsvorrichtung 31 ist schematisch in der Leitung 27 am Ausgang des Leistungsteils 3, also zwischen dem Leistungsteil 3 und der Anschlußbuchse 29 oder 30, dargestellt. Die Erfassungsvorrichtung 31 kann beispielsweise aus einem zum Stand der Technik zählenden Shunt gebildet werden, wodurch der Stromfluß über die Leitung 27 vom Leistungsteil 3 ermittelt werden kann und somit eine Regelung bzw. Steuerung von der Steuervorrichtung 4 durch das Erfassen der Ist-Werte, insbesondere des Stromes und der Spannung, durchgeführt werden kann. Die Regelung bzw. die Steuerung von der Steuervorrichtung 4 erfolgt softwaremäßig, d.h., daß in der Mikroprozessorsteuerung 26 von einem Speicher entsprechende Softwareprogramme geladen werden, sodaß beispielsweise aufgrund eines Soll-/Ist-Vergleiches eine Regelung und/oder Steuerung des Leistungsteils 3 erfolgen kann.

Bei dem dargestellten Ausführungsbeispiel ist nunmehr zwischen dem Schweißbrenner 10 und dem Werkstück 16 die Fernreglereinheit 23 angeordnet, d.h., daß der Schweißbrenner 10, insbesondere der Schweißdraht 13, welcher die Elektrode ausbildet, mit einem Elektrodenhalter 32 kontaktiert ist. Dieser Elektrodenhalter 32 bildet einen ersten Eingang 33 der Fernreglereinheit 23. Gleichzeitig ist die Fernreglereinheit 23 über einen weiteren Elektrodenhalter 34, welcher wiederum einen Eingang der Fernreglereinheit 23 ausbildet, kontaktiert. Durch die Anordnung der Fernreglereinheit 23 zwischen dem Schweißbrenner 10 und dem Werkstück 16 ist es nunmehr möglich, daß eine Stromversorgung der Fernreglereinheit 23 vom Leistungsteil 3 durchgeführt wird, d.h., daß aufgrund der Kontaktierung des Schweißdrahtes 13 mit dem ersten Eingang 33 und die Kontaktierung des weiteren Einganges 35 mit dem Werkstück 16 über die beiden Versorungsleitungen 17, 18 ein Stromkreis mit dem Leistungsteil 3, insbesondere mit der Inverterstromquelle 24, gebildet werden kann.

Die Fernreglereinheit 23 ist derartig aufgebaut, daß zwischen den beiden Eingängen 33, 35 eine Verbindungsleitung 36 unter Zwischenschaltung einer Schaltvorrichtung 37 angeordnet ist, wodurch nunmehr ein Stromkreis vom Leistungsteil 3 über die Versorgungsleitung 17, der Verbindungsleitung 36, dem Werkstück 16 und der Versorgungsleitung 18 aufgebaut werden kann.

Die Schaltvorrichtung 37 weist dabei einen Widerstand 38 und ein schaltbares Bauelement 39 auf, wodurch bei Ansteuerung des schaltbaren Bauelementes 39 ein Stromkreis zwischen den Eingängen 33 und 35 mit einem konstanten Stromfluß durch den Widerstand 38 gebildet wird. Das schaltbare Bauelement 39 kann beispielsweise durch einen Transistor, Triac oder anderen elektrischen Schaltelementen gebildet werden. Selbstverständlich ist es möglich, jede beliebige Schaltvorrichtung 37 einzusetzen, wobei jedoch darauf geachtet werden muß, daß beim Aktivieren der Schaltvorrichtung 37 ein konstanter Stromfluß zwischen den Eingängen 33, 35 erzeugt wird, d.h., daß beispielsweise durch Anordnung des Widerstandes 38 mit einem entsprechenden Wert ein konstanter Stromfluß vom Leistungsteil 3 erzeugt wird.

Damit dieser Stromfluß über die Verbindungsleitung 36 von der Fernreglereinheit 23 erfaßt werden kann, weist diese wiederum eine Erfassungsvorrichtung 40 auf. Diese Erfassungsvorrichtung 40 kann wiederum durch einen zum Stand der Technik zählenden Shunt oder anderen zum Stand der Technik zählende Erfassungsvorrichtungen 40 zum Erfassen eines Stromflusses gebildet werden. Damit nunmehr eine Steuerung der Schaltvorrichtung 37 sowie eine Verarbeitung des ermittelten Stromflusses von der Erfassungsvorrichtung 40 durchgeführt werden kann, weist die Fernreglereinheit 23 eine Logikeinheit 41 auf. Die Logikeinheit 41 kann beispielsweise durch eine Mikroprozessorsteuerung oder anderen digitalen Bauelementen, wie selbstprogrammierbare Chips gebildet werden.

Ein Ausgang der Logikeinheit 41 ist über eine Steuerleitung 42 mit einem Eingang des schaltbaren Bauelementes 39 verbunden, wodurch durch Aktivieren des Ausganges der Logikeinheit 41 über die Steuerleitung 42 das schaltbare Bauelement 39 aktiviert werden kann, d.h., daß das schaltbare Bauelement 39 geschlossen wird und somit vom Schweißbrenner 10 zum Werkstück 16 ein Stromfluß über die Verbindungsleitung 36 aufgebaut wird. Die Erfassungsvorrichtung 40 ist über zumindest eine Leitung 43 mit einem Eingang der Logikeinheit 41 verbunden, wodurch die von der Erfassungsvorrichtung 40 ermittelten Ist-Werte an die Logikeinheit 41 weitergegeben werden.

Damit von einem Benutzer eine Fernregelung des Schweißgerätes 1 durchgeführt werden kann, ist mit der Logikeinheit 41 eine Einstellvorrichtung 44 über zumindest eine Leitung 45 verbunden. Die Einstellvorrichtung 44 kann beispielsweise durch ein zum Stand der Technik zählendes Potentiometer oder durch Taster gebildet werden, wodurch es nunmehr möglich ist, daß durch Verändern des Widerstandwertes des Potentiometers von der Einstellvorrichtung 44 der Benutzer einen neuen Soll-Wert für die Logikeinheit 41, insbesondere für das Schweißgerät 1, festlegen kann, d.h., daß aufgrund der Verstellung des Potentiometers eine Umsetzung von der Logikeinheit 41 auf einen entsprechenden Soll-Wert für einen Schweißparameter, wie beispielsweise der Stromhöhe erfolgt, sodaß über die Fernreglereinheit 23, wie nachstehend noch detaillierter beschrieben, eine Veränderung des am Schweißgerät 1 eingestellten Stromes, insbesondere der Stromhöhe, von der Fernreglereinheit 23 durchgeführt werden kann.

Hierzu ist es nunmehr auch möglich, daß bei Verwendung von einzelnen Tastern für die Veränderung eines vorgegebenen Wertes, insbesondere eines Soll-Wertes, diese direkt mit der Logikeinheit 41 verbunden werden kann, da die Logikeinheit 41 eine Umsetzung der einzelnen Tastenimpulse bzw. eine Auswertung einer Zeitdauer für die Betätigung des Tasters durchführt, sodaß ein entsprechendes Ansteuern des schaltbaren Bauelementes 39 möglich ist. Dadurch wird erreicht, daß in der Fernreglereinheit 23 nur logisch "0" und "1" Pegel erzeugt werden bzw. vorhanden sind, wodurch die Dimensionierung der einzelnen Bauelemente vereinfacht wird.

Um die einzelnen Komponenten der Fernreglereinheit 23 mit Strom und Spannung zu versorgen, ist in der Fernreglereinheit 23 eine Stromversorgungseinheit 46 angeordnet. Diese Stromversorgungseinheit 46 ist derartig angeordnet, daß diese mit den beiden Eingängen 33, 35 der Fernreglereinheit 23 verbunden ist und somit eine Energieversorgung beim Kontaktieren der Fernreglereinheit 23 mit dem Schweißbrenner 10 und dem Werkstück 16 unabhängig von den Zuständen der einzelnen Komponeten sichergestellt ist, d.h., daß durch diesen Stromfluß bzw. die Energieversorgung die Stromversorgungseinheit 46 eine entsprechende Betriebsspannung für die analogen und digitalen Bauelemente der Fernreglereinheit 23 gebildet wird und somit eine Funktion der Fernreglereinheit 23 sichergestellt ist. Der Übersichtlichkeit halber werden jedoch die Stromversorgungsleitungen für die einzelnen Komponenten nicht dargestellt.

Hierzu ist es möglich, daß die einzelnen Komponenten, wie das schaltbare Bauelement 39, der Widerstand 38 und die Erfassungsvorrichtung 40 in der Stromversorgungseinheit 46 integriert sind. Dadurch wird erreicht, daß nur ein einziger Stromkreis in der Fernreglereinheit 23 gebildet wird.

Die soeben beschriebenen einzelnen Komponenten der Fernreglereinheit 23 entsprechen der Mindestanforderung für die erfindungsgemäße Fernreglereinheit 23, d.h., daß durch diese Komponenten der Benutzer die Möglichkeit hat, über die Fernreglereinheit 23 eine Ein- bzw. Verstellung eines bestimmten Schweißparameters am Schweißgerät 1 durchführen kann. Selbstverständlich ist es möglich, daß diese Fernreglereinheit 23 noch weitere Zusatzkomponenten aufweisen kann, die die Bedienung für den Benutzer vereinfachen bzw. unterstützen.

Hierzu ist es beispielsweise möglich, daß mit der Logikeinheit 41 eine Anzeigevorrichtung 47 verbunden ist. Diese Anzeigevorrichtung 47 kann beispielsweise durch eine LCD-Anzeige gebildet werden, wodurch der Benutzer nunmehr die Möglichkeit hat, daß er beim Einstellen eines bestimmten Wertes eines Schweißparameters über die Einstellvorrichtung 44 diese Veränderung an der Anzeigevorrichtung 47 angezeigt bekommt. Weiters ist es möglich, daß mit der Logikeinheit 41 über Eingänge mehrere Einstellorgane 48 bis 50 verbunden sind. Diese Einstellorgane 48 bis 50 können beispielsweise durch handelsübliche Schalter gebildet werden.

Der Benutzer hat durch die Einstellorgane 48 bis 50 die Möglichkeit, unterschiedliche Schweißparameter auszuwählen, d.h., daß beispielsweise das Einstellorgan 48 für den Strom, das Einstellorgan 49 für die Spannung und das Einstellorgan 50 für die Drahtvorschubgeschwindigkeit zugeordnet sind und somit bei Betätigung eines dieser Einstellorgane 48 bis 50 der entsprechende Schweißparameter über die Fernreglereinheit 23 am Schweißgerät 1 ferneingestellt werden kann. Selbstverständlich ist es möglich, daß zumindest ein zusätzliches Einstellorgan 48 angeordnet sein kann, über das der Benuzter die einzelnen Schweißparametern taktweise aufrufen kann, d.h., daß durch Betätigen dieses Einstellorganes 48 ein serielles weiterschalten auf den nächsten Schweißparamter durchgeführt wird, sodaß eine beliebig höhere Anzahl von Schweißparametern ausgewählt werden können.

Das Anwendungsgebiet der Fernreglereinheit 23 liegt nun darin, daß ein Benutzer über diese Fernreglereinheit 23 zumindest einen Schweißparameter am Schweißgerät 1 verändern kann, wobei jedoch bei der erfindungsgemäßen Fernreglereinheit 23 der Datenaustausch bzw. der Datentransfer zwischen der Fernreglereinheit 23 und dem Schweißgerät 1 oder einer Stromquelle in digitaler Form erfolgt, d.h., daß eine serielle Datenübertragung bzw. ein serieller Datenaustausch zwischen der Stromquelle 2, insbesondere dem Schweißgerät 1, und einem extern Gerät, insbesondere der Fernreglereinheit 23, direkt über die Schweißleitungen, insbesondere die Versorgungsleitung 17, 18 mit digitalen Pegen, insbesondere mit "Logisch 1" und "Logisch 0"-Pegel durchgeführt wird. Bei einem derartigen Datenaustausch bzw. Datentransfer wird von der Fernreglereinheit 23 ein serielles Datenprotokoll, wie es aus dem Stand der Technik für einen Datenaustausch beispielsweise bei einem Computer der Fall ist, erstellt, welches anschließend über die Versorgungsleitungen 17, 18 an das Schweißgerät 1 übergeben bzw. übertragen wird. Die Erstellung des Datenprotokolls erfolgt in der Logikeinheit 41, wobei anschließend durch Aktivieren des schaltbaren Bauelementes 39 die digitalen Pegel bzw. Signale "1" und "0" erzeugt werden.

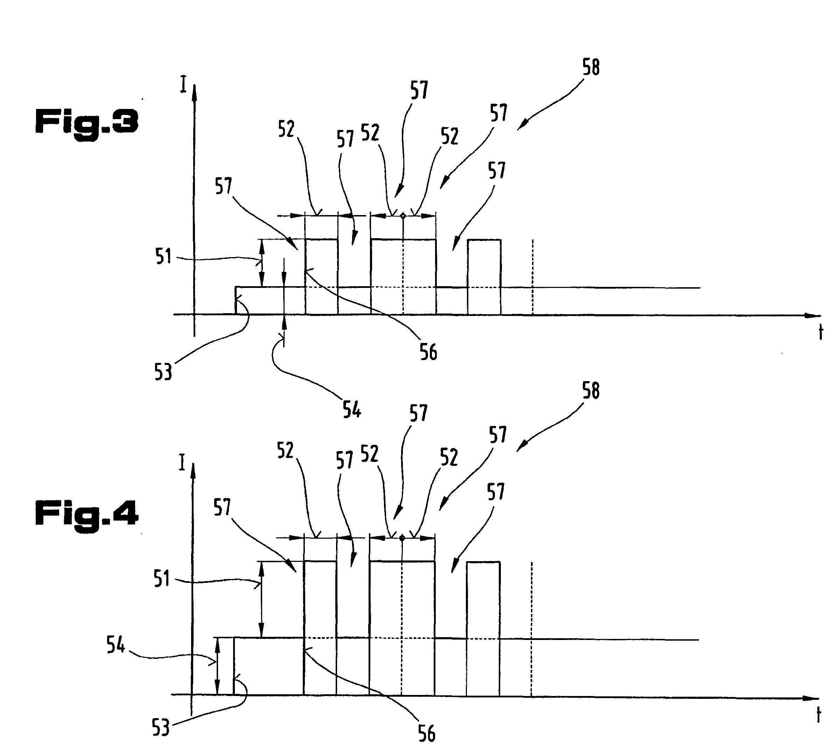

Der Funktionsablauf zum Einstellen eines Schweißparameters über die Fernreglereinheit 23 wird nun durch das Ausführungsbeispiel nach Fig. 2 und einem Beispiel eines Ausschnittes von einem seriellen Datenprotokoll, wie in den Diagrammen der Fig. 3 und 4 gezeigt, beschrieben.

Damit ein Benutzer eines derartigen Schweißgerätes 1 eine Einstellung bzw. Veränderung eines Schweißparameters über die Fernreglereinheit 23 durchführen kann, muß dieser zuerst die Fernreglereinheit 23 über den Eingang 35 mit dem Werkstück 16 kontaktieren. Hierzu ist es möglich, daß der Eingang 35, insbesondere der Elektrodenhalter 34, durch einen Magnet gebildet ist, sodaß durch einfaches Aufsetzen der Fernreglereinheit 23 eine fixierte Kontaktierung mit der Oberfläche des Werkstückes 16 entsteht. Hierdurch wird erreicht, daß nun der Eingang 35 über das Werkstück 16 und der Versorgungsleitung 18 mit dem Leistungsteil 3 des Schweißgerätes 1 oder der Stromquelle 2 verbunden ist.

Damit der Stromkreis mit dem Leistungsteil 3 des Schweißgerätes 1 geschlossen werden kann, muß nunmehr der Benutzer den Schweißbrenner 10, insbesondere den Schweißdraht 13, welcher die Elektrode ausbildet, mit dem weiteren Eingang 33, insbesondere mit dem Elektrodenhalter 32, kontaktieren, sodaß nunmehr ein Stromkreis über die Versorgungsleitung 17 zur Versorgungsleitung 18 unter Zwischenschaltung der Fernreglereinheit 23 erzeugt werden kann. Da bei den gezeigten Ausführungsbeispielen zwischen den beiden Eingängen 33 und 35 die Stromversorgungseinheit 46 parallel zu dem geschaltenen Bauelement 39 angeordnet ist, kann nunmehr von der Stromversorgungseinheit 46 eine Betriebsspannung für die einzelnen Komponenten der Fernreglereinheit 23 gebildet werden, da bei aktiviertem Schweißgerät 1 an dem Schweißbrenner 10 immer eine Leerlaufspannung anliegt, wodurch ein Stromkreis vom Eingang 33 über die Stromversorgungseinheit 46 zum Eingang 35 gebildet wird und somit die Stromversorgungseinheit 46 mit Energie versorgt wird.

Durch das Einschalten bzw. Zwischenschalten der Fernreglereinheit 23 als Verbraucher wird nunmehr vom Leistungsteil eine Energieversorgung aufgebaut, wobei aufgrund eines konstanten Innenwiderstandes der Stromversorgungseinheit 46 ein konstanter Stromfluß aufgebaut wird.

Dabei ist es nunmehr möglich, daß nach der Energieversorgung der Bauelemente der Fernreglereinheit 23 von der Logikeinheit 41 ein Datentransfer aktiviert wird, d.h., daß durch Ansteuern des schaltbaren Bauelementes 39 eine Kennung in Form eines digitalen, seriellen Datenprotokolls über die Schweißleitungen, insbesondere über die Versorgungsleitungen 17, 18, an das Schweißgerät 1 durchgeführt wird. Diese Kennung bzw. das gelieferte Datenprotokoll kann vom Schweißgerät 1, insbesondere von der Erfassungsvorrichtung 31 erkannt werden, wobei die einzelnen digitalen Pegel direkt an die Steuervorrichtung 4 weitergeleitet werden. Von der Steuervorrichtung 4 wird anschließend das übertragene Datenprotokoll, insbesondere die übersandte Kennung der Fernreglereinheit 23, ausgewertet und beispielsweise mit einer in einer Speichervorrichtung hinterlegten Kennung verglichen. Bei Übereinstimmung der hinterlegten Kennung mit der übersandten Kennung kann die Steuervorrichtung 4 feststellen, daß eine erfindungsgemäße Fernreglereinheit 23 zwischen den beiden Schweißleitungen, insbesondere den Versorgungsleitungen 17, 18 zwischengeschalten ist, wodurch von der Steuervorrichtung 4 ein Aktivieren des Zündprozesses unterbunden werden kann. Hierzu ist es beispielsweise möglich, daß bei einer Erkennung eines Stromflusses von der Erfassungsvorrichtung 31 die Steuervorrichtung 4 eine voreinstellbare Zeitdauer für eine Verzögerung zum Einleiten des Zündprozesses aktiviert wird, sodaß eine Auswertung bei der Inbetriebnahme einer Fernreglereinheit 23 der übersandten Daten möglich ist.

Durch diese Erkennungsmöglichkeit einer zwischengeschaltenen Fernregelereinheit 23 ist es auch möglich, daß unterschiedliche Fernreglereinheiten 23 für ein Schweißgerät 1 eingesetzt werden können. Dabei können zu den einzelnen Kennungen der einzelnen Fernreglereinheiten 23 zusätzliche Daten hinterlegt sein, sodaß beispielsweise von der Steuervorrichtung 4 diese zusätzlichen Daten gelesen werden können und somit die Funktionen der eingesetzten Fernreglereinheit 23 erkannt bzw. zugeordnet werden können. Dadurch kann beispielsweise die Steuervorrichtung 4 feststellen, wieviel zusätzliche Einstellorgane 48 bis 50 an der Fernreglereinheit 23 angeordnet sind und welche Funktionen diese Einstellorgane 48 bis 50 ausführen.

Der durch die Stromversorgungseinheit 46 verursachten Stromfluß muß vom Schweißgerät 1, insbesondere von der Steuervorrichtung 4, erkannt werden, da ansonst, wie es bei einem zum Stand der Technik zählenden Schweißgerät 1 der Fall ist, eine Zündung des Lichtbogens 15, also eine Einleitung des Zündprozesses, oder eine Aufschmelzung des vermeindliche Kurzschlusses, wie es bei einem Schweißprozeß üblich ist, von der Steuervorrichtung 4 eingeleitet werden würde. Durch ein Einleiten eines derartigen Prozeßablaufes würde aufgrund des hohen Stromfluß eine Zerstörung der Fernreglereinheit 23 verursacht werden. Damit dies jedoch vermieden werden kann, wird von der Steuervorrichtung 4 eine softwaremäßige Auswertung des abgegebenen Stromflusses bzw. des übertragenen Datenprotokolls durchgeführt.

Dabei ist es auch möglich, daß die Steuervorrichtung 4 durch die Erfassungsvorrichtung 40 erkennen kann, daß eine konstante Stromabnahme bzw. Stromabgabe vom Leistungsteil 3 ohne eingeleiteten Schweißprozeß stattfindet, wodurch von der Steuervorrichtung 4 beispielsweise eine Unterdrückung des Zündprozesses oder anderer Prozeßabläufe durchgeführt wird.

Das Erkennen, daß eine Fernreglereinheit 23 zwischen dem Schweißbrenner 10 und dem Werkstück 16 zwischengeschaltet ist, kann auch durch die Stromhöhe stattfinden, d.h., daß in der Steuervorrichtung 4 ein Soll-/Ist-Vergleich des abgegebenen Stromes durchgeführt wird, wobei durch die Erfassungsvorrichtung 31 die Höhe des Stromflusses ermittelt und an die Steuervorrichtung 4 weitergeleitet wird, sodaß eine Erkennung über die Stromhöhe möglich ist. Selbstverständlich ist es möglich, daß die einzelnen unterschiedlichen Verfahren zum Erkennen der Fernreglereinheit 23 miteinander kombiniert werden können.

Damit nunmehr eine digitale Datenübertragung zwischen der Fernreglereinheit 23 und dem Schweißgerät 1, insbesondere der Steuervorrichtung 4 durchgeführt werden kann, hat der Benutzer nunmehr die Möglichkeit, über die Einstellvorrichtung 44 zumindest einen Schweißparameter zu verändern, d.h., daß vom Benutzer über die Einstellvorrichtung 44 ein neuer Soll-Wert festgelegt wird, welcher anschließend in digitaler Form an das Schweißgerät 1 übermittelt wird. Hierzu ist es möglich, daß bei Einsatz einer Anzeigevorrichtung 47 der eingestellte Soll-Wert an dieser angezeigt wird.

Die Umsetzung des neu eingestellten Soll-Wertes in ein digitales Datenprotokoll wird von der Logikeinheit 41 durchgeführt, wobei ein Beispiel eines derartigen digitalen Datenprotokolls in den Fig. 3 und 4 dargestellt ist. Die serielle Datenübertragung des Datenprotokolls erfolgt durch eine entsprechende Ansteuerung des schaltbaren Bauelementes 39. Hierzu wird durch Aktivieren des schaltbaren Bauelementes 39 der schematisch dargestellte Schalter geschlossen, wodurch ein Stromfluß vom Eingang 33 über den Widerstand 38, dem schaltbaren Bauelement 39 zum Eingang 35 gebildet wird. Da nunmehr zwischen den beiden Eingängen 33, 35 ein entsprechender Widerstand 38 durchströmt, erfolgt eine Stromerhöhung auf einen vorbestimmten Wert, wie dies in Fig. 3 ersichtlich ist. Durch diese Stromerhöhung wird von der Logikeinheit 41 der logische Zustand "1" durch das schaltbare Bauelement 39 hergestellt. Der logische Zustand "0" wird von der Logikeinheit 41 durch Deaktivierung des schaltbaren Bauelementes 39 erzielt, wodurch ein Absinken der Stromhöhe auf den ursprünglichen Wert erfolgt. Die Logikeinheit 41 steuert nunmehr durch Öffnen und Schließen des schaltbaren Bauelementes 39 die Datenübertragung zum Schweißgerät 1, d.h., daß durch das schaltbare Bauelement 39 digitale Pegel, insbesondere "Logisch 1" und "Logisch 0"-Pegel, gebildet werden, die seriell aneinandergefügt werden und somit ein Datenprotokoll gebildet wird. Dieses Datenprotokoll bzw. die einzelnen digitalen Pegel werden von der Erfassungsvorrichtung 31 erkannt, wodurch eine Auswertung der einzelnen Zustände bzw. Pegelkombinationen von der Steuervorrichtung 4 durchgeführt werden kann und somit entsprechende Daten für die Verstellung eines Schweißparameters übertragen werden können.

Dabei ist zu erwähnen, daß das Schweißgerät 1 sowie die Fernreglereinheit 23, insbesondere die Steuervorrichtung 4, und die Logikeinheit 41, aufeinander abgestimmt sein müssen, d.h., daß sowohl die Logikeinheit 41 und die Steuervorrichtung 4 die logischen Zustände bzw. Pegel "1" und "0" erkennen können müssen. Die Daten, wie die einzelnen digitalen Pegel aufgebaut sind, sind in einer Speichervorrichtung für die Logikeinheit 41 und für die Steuervorrichtung 4 hinterlegt, wodurch eine Auswertung der digitalen Pegel sowohl von der Steuervorrichtung 4 als auch von der Logikeinheit 41 möglich ist. Diese Daten beziehen sich dabei auf eine Höhe 51 des Stromes und auf eine Zeitdauer 52 für die Länge eines Pegels. Dabei ist es möglich, daß durch die Verwendung einer Kennung für die Fernreglereinheit 23 diese Daten bei der Inbetriebnahme mitübersandt werden, sodaß für die verschiedensten Fernreglereinheiten 23 unterschiedliche Kenngrößen der Pegel verwendet werden können.

Durch dieses Festlegen der Daten für einen einzigen Impuls bzw. einen Pegel kann nunmehr gesagt werden, daß durch die Höhe 51 und die Zeitdauer 52 bei einer digitalen Datenübertragung ein Bit festgelegt wird, sodaß durch aufeinanderfolgendes Aussenden mehrerer einzelner Bits ein entsprechendes Datenprotokoll, wie es bereits aus dem Stand der Technik bekannt ist, erzeugt werden kann. Diese Definition eines Bites ist insofern notwendig, da es bei einer seriellen Datenübertragung vorkommen kann, daß zwei gleich Impulse bzw. Pegel hintereinander ausgesandt werden müssen und somit durch diese Definition die Steuervorrichtung 4 erkennen kann, daß zwei oder mehrere gleiche Signale bzw. Pegel hintereinander übertragen werden können. Die Steuervorrichtung 4 bzw. die Logikeinheit 41 kann aufgrund der hinterlegten Zeitdauer einfach ermitteln, wie lange das schaltbare Bauelement 39 geschlossen war und somit die Anzahl der hintereinander ausgesendeten Bits herausgefiltert werden können.

Durch eine derartige Ausbildung der Fernreglereinheit 23 ist es nunmehr möglich, daß eine sogenannte digitale Datenübertragung von der Fernreglereinheit 23 zum Schweißgerät 1 durchgeführt wird, d.h., daß die Datenübertragung durch einzelne Bits zusammengesetzt wird, welche anschließend von der Steuervorrichtung 4 im Schweißgerät 1 ausgewertet wird. Dies ist insofern möglich, da im Schweißgerät 1 die Erfassungsvorrichtung 31 zum Erkennnen und zur Aufnahme des Stromflusses eingesetzt wird, sodaß die Stromerhöhungen sowie die Strompausen aufgenommen werden und an die Steuervorrichtung 4 in Form von digitalen Impulsen zur Auswertung weitergeleitet werden, wobei die Steuervorrichtung 4 durch ein Softwareprogramm die Daten auswerten kann.

Durch diese Form der Datenübertragung ist es möglich, daß aufgrund der digitalen seriellen Datenübertragung von der Fernreglereinheit 23 mehrere unterschiedlichste Schweißparameter vom Benutzer ferneingestellt werden können, d.h., daß durch die Anordnung der Einstellorgane 48 bis 50 der Benutzer unterschiedliche Schweißparameter, die jeweils einem Einstellorgan 48 bis 50 zugeordnet sind, auswählen kann, worauf der Benutzer über die Einstellvorrichtung 44 eine Veränderung des Soll-Wertes für den ausgewählten Schweißparameter durchführen kann. Hierzu ist es beispielsweise möglich, daß über die Fernreglereinheit 23 der Schweißstrom, die Schweißspannung, die Drahtvorschubgeschwindigkeit usw. eingestellt werden kann. Der Benutzer muß lediglich eines der Einstellorgane 48 bis 50 aktivieren, worauf von der Logikeinheit 41 erkannt wird, welcher Schweißparameter verändert werden soll, sodaß anschließend ein entsprechendes Datenprotokoll für diesen Schweißparameter von der Logikeinheit 41 erstellt wird und somit durch entsprechendes Ansteuern des schaltbaren Bauelementes 39 dem Schweißgerät 1 mitgeteilt wird, daß dieser Schweißparameter über die Fernreglereinheit 23 verändert werden soll.

Bei einer derartigen Anwendung der Fernreglereinheit 23 ist es beispielsweise möglich, daß für die unterschiedlichsten Schweißparameter unterschiedliche Bit-Muster also Kennungen hinterlegt sind, sodaß bei einer Datenübertragung die Logikeinheit 41 dieses Bit-Muster an die Steuervorrichtung 4 übersendet, wodurch die Steuervorrichtung 4 den zuverändernden Schweißparameter erkennen kann. Der neue vom Benutzer festgelegte Soll-Wert wird von der Logikeinheit 41 an das entsprechende Bit-Muster angefügt, wodurch eine Ferneinstellung mit nur einer Fernreglereinheit 23 für unterschiedliche Schweißparametern ermöglicht wird. Hierzu ist es möglich, daß der Benutzer durch taktweises Auswählen der einzelnen Schweißparamter eine Vielzahl unterschiedlicher Schweißparameter verändern bzw. einstellen kann.

In Fig. 3 ist ein Ausschnitt eines Datenprotokolls zum Ferneinstellen von der Fernreglereinheit 23 dargestellt. Dieses Datenprotokoll zeigt die aufgenommenen Signale bzw. Pegel von der Erfassungsvorrichtung 31 für die Steuervorrichtung 4.

Aus dem dargestellten Datenprotokoll ist beispielsweise ersichtlich, daß zu einem Zeitpunkt 53 die Fernreglereinheit 23 in den Stromkreis des Leistungsteils 3 integriert wird, d.h., daß der Eingang 35 mit dem Werkstück 16 und der Eingang 33 mit dem Schweißbrenner 10 verbunden wurde und somit eine konstante Stromentnahme bzw. - aufnahme von der Fernreglereinheit 23 mit einer Strom höhe 54 hergestellt wird. Nachdem der Benutzer die Auswahl eines zu verändernden Schweißparameters über die Einstellorgane 48 bis 50 getroffen hat und eine Veränderung des vorgegebenen Soll-Wertes über die Einstellvorrichtung 44 durchgeführt hat, kann dieser durch Aktivieren eines weiteren Einstellorgans 55 die Datenübertragung starten, wie dies zum Zeitpunkt 56 ersichtlich ist. Selbstverständlich ist es möglich, daß eine direkte Datenübertragung durchgeführt wird und somit eine Aktivierung der Datenübertragung über das Einstellorgan 55 entfallen kann.

Ab dem Zeitpunkt 56 ist ein Pegel 57 eines Datenprotokolls 58 dargestellt, der durch Ansteuern des schaltbaren Bauelementes 39 von der Logikeinheit 41 erzeugt wird, d.h., daß durch Schließen des schaltbaren Bauelementes 39 nunmehr der Widerstand 38 in den Stromkreis zwischen dem Schweißbrenner 10 und dem Werkstück 16 integriert ist, wodurch eine Stromerhöhung um die Höhe 51 stattfindet und somit der digitale Pegel 57 erzeugt wird. Damit ein eindeutiger "Logisch 1"-Pegel 57, also ein Bit, übertragen wird, wird das schaltbare Bauelement 39 von der Logikeinheit 41 über die Zeitdauer 52 angesteuert, wodurch von der Erfassungsvorrichtung 31 des Schweißgerätes 1 ein entsprechender Pegel 57 über die Zeitdauer 52 aufgenommen werden kann. Dieser wird direkt an die Steuervorrichtung 4 weitergeleitet. Die Steuervorrichtung 4 kann nun erkennen, daß aufgrund der Erhöhung des Stromflusses um die Höhe 51 der Pegel 57 von der Fernreglereinheit 23 erzeugt wurde und über die Schweißkabeln an die Stromquelle 2 weitergeleitet wurde. Gleichzeitig wird von der Steuervorrichtung 4 die Zeitdauer 52 für den Pegel 57 überprüft, wodurch die Steuervorrichtung 4 erkennen kann, daß nach Ablauf der vorgegebenen Zeitdauer 52 der Strom wiederum auf die Stromhöhe 54 absinkt und somit der erste Pegel 57, also ein Bit, übertragen wurde. Die Überprüfung der Zeitdauer 52 für einen Pegel 57 ist insofern notwendig, da bei zwei gleichen hintereinander ausgesandten Pegel 57 die Steuervorrichtung 4 aufgrund der Zeitdauer 52 erkennen kann, daß aufgrund der doppelten Zeitdauer 52 zwei gleich aufeinanderfolgende Pegel 57 übersandt wurden.

Da eine derartige digitale Datenübertragung zum Stand der Technik zählt, wird auf die weiteren Pegel 57 nicht näher eingegangen. Es kann jedoch grundsätzlich gesagt werden, daß durch das Aussenden derartiger seriell hintereinander ausgesandten Pegel 57 ein Datenprotokoll zusammengestellt wird, welches von der Steuervorrichtung 4 über eine entsprechende Berechnung bzw. ein Softwareprogramm ausgewertet wird. Damit bei zwei gleichartig hintereinander angeorndete Pegel 57, also zwei "Logisch 1"-Pegel oder "Logisch 0"-Pegel, die Steuervorrichtung 4 die beiden hintereinander ausgesandten Pegel 57 erkennen kann, ist in der Steuervorrichtung 4 sowie in der Logikeinheit 41 die Zeitdauer 52, wie lange ein Impuls bzw. Pegel 57 dauern darf, hinterlegt bzw. wird diese Zeitdauer 52 bei der Inbetriebnahme der Fernreglereinheit 23 zwischen der Logikeinheit 41 und der Steuervorrichtung 4 abgestimmt, sodaß bei doppelter bzw. mehrfacher Aussendung gleicher Pegel 57 mit der Zeitdauer 52 die Steuervorrichtung 4 erkennen kann, daß zwei oder mehr gleiche Pegel 57 hintereinander übersandt werden, wie dies beispielsweise durch zwei "Logisch 1"-Signale in Fig. 3 dargestellt ist. Bei einer derartigen Übertragung von zwei gleichen Pegel 57 wird das schaltbare Bauelement 39 entweder über die doppelte oder mehrfache Zeitdauer 52 geschlossen bzw. offen gehalten.

Der Vorteil einer derartigen digitalen Datenübertragung liegt nun darin, daß über eine derartige Fernreglereinheit 23 beliebig viele Daten an das Schweißgerät 1 übersandt werden können. Somit ist es möglich, daß unterschiedlichste Schweißparameter über die Fernreglereinheit 23 eingestellt werden können.

Bei einer derartigen Ausbildung einer digitalen Fernreglereinheit 23 ist es auch möglich, daß ein gegenseitiger Datenaustausch, also ein bidirektionaler Datenaustausch, zwischen dem Schweißgerät 1 und der Fernreglereinheit 23 durchgeführt werden kann. Hierzu ist beispielsweise - wie strichliert dargestellt - parallel zu dem schaltbaren Bauelement 39 ein weiterer Widerstand 59 angeordnet. Durch das Parallelschalten eines weiteren Widerstandes 59 zum schaltbaren Bauelement 39 wird nun erreicht, daß beim Zwischenschalten der Fernreglereinheit 23 gleichzeitig zu dem Stromkreis über die Stromversorgungseinheit 46 ein Stromkreis über die beiden seriell zueinander geschalteten Widerstände 38, 59 zwischen den Eingängen 33, 35 gebildet wird, d.h., daß dadurch das schaltbare Bauelement 39 durch den weiteren Widerstand 59 überbrückt wird und somit ein wiederum konstanter Stromfluß erzeugt wird, der durch Aktivieren des schaltbaren Bauelements 39 verändert werden kann. Dies ist für einen bidirektionalen Datenaustausch bei dem dargestellten Ausführungsbeispiel insofern notwendig, da bei der dargestellten Fernreglereinheit 23 die Erfassungsvorrichtung 40 in den Stromkreis der Schaltvorrichtung 37 angeordnet ist, sodaß über diesen Stromkreis von der Erfassungsvorrichtung 40 die von dem Schweißgerät 1 bzw. von der Stromquelle 2 ausgesendeten digitalen Pegel 57 ermitteln und erkennen kann.

Selbstverständlich ist es möglich, daß bei der Anordnung des schaltbaren Bauelementes 39 in der Stromversorgungseinheit 46 dieser zusätzliche Widerstand 59 entfallen kann, da über die Stromversorgungseinheit 46 für die Erzeugung der Betriebsspannung ein konstanter Stromkreis aufgebaut wird. Hierzu wird jedoch die Erfassungsvorrichtung 40 ebenfalls in der Stromversorgungseinheit 46 angeordnet.

Wie nun besser aus Fig. 4 ersichtlich ist, ist wiederum ein schematisches Datenprotokoll 58 für eine Datenübertragung nunmehr von dem Schweißgerät 1, insbesondere von der Stromquelle 2, zur Fernreglereinheit 23 gezeigt, wobei aufgrund dieser Ausführung mit dem parallel geschalteten Widerstand 59 ein bidirektionaler Datentransfer möglich ist.

Wie zuvor beschrieben, weist die Fernreglereinheit 23 für einen bidirektionalen Datenaustausch parallel zum schaltbaren Bauelement 39 den Widerstand 59 auf, sodaß ein ständiger Stromfluß zwischen den beiden Eingängen 33, 35 über die Schaltvorrichtung 37 der Fernreglereinheit 23 gebildet wird. Wie nun zum Zeitpunkt 53 ersichtlich ist, wird bei der Kontaktierung der Fernreglereinheit 23 zwischen dem Werkstück 16 und dem Schweißbrenner 10 wiederum eine konstante Stromaufnahme durch die Serienschaltung der beiden Widerstände 38, 59 erzeugt. Bei der Inbetriebnahme ist es nunmehr wiederum möglich, daß von der Fernreglereinheit 23 eine Kennung an die Stromquelle 2 übersandt wird, sodaß die Steuervorrichtung 4 erkennen kann, daß durch den hervorgerufenen Stromfuß kein Zündprozeß gestartet werden soll.

Weiters ist es möglich, daß eine andere Art der Erkennung des Zwischenschaltens der Fernreglereinheit 23 eingesetzt wird, die auch in Kombination mit der Aussendung der Kennung verwendet werden kann. Dabei wird beim Erkennen eines Stromflusses von der Erfassungsvorrichtung 31 die ermittelte Stromhöhe 54, welche vom Leistungsteil 3 an die Fernreglereinheit 23 geliefert wird, an die Steuervorrichtung 4, insbesondere die Mikroprozessorsteuerung 26, weitergeleitet, die aufgrund der definierten Stromhöhe 54 erkennen kann, daß die Fernreglereinheit 23 als Verbraucher angeschlossen ist. Dadurch kann nunmehr die Steuervorrichtung 4 das Einleiten des Zündprozesses bzw. des Aufschmelzprozesses, wie er üblicherweise beim Kontaktieren des Schweißdrahtes 13 am Werkstück 16 durchgeführt wird, unterbinden.

Durch diesen konstanten Stromfluß zwischen den Eingängen 33, 35 ist es nunmehr möglich, daß vom Schweißgerät 1 durch Aussenden derartiger zuvor beschriebener Stromimpulse bzw. digitaler Pegel 57 ein Datenaustausch mit der Fernreglereinheit 23 in beiden Richtungen durchgeführt werden kann. Dies ist insofern möglich, da die Fernreglereinheit 23 ebenfalls eine Erfassungsungsvorrichtung 40 aufweist und somit die einzelnen Stromimpulse bzw. digitalen Pegel 57, wie sie zuvor beschrieben wurden, erkennen kann und eine Auswertung des Datenprotokolls von der Logikeinheit 41 durchgeführt werden kann.

Durch diesen bidirektionalen Datenaustausch ist es nunmehr möglich, daß voreingestellte Soll-Werte über die Fernreglereinheit 23 vom Schweißgerät 1 abgefragt werden können, sodaß anschließend der Benutzer durch Betätigung der Einstellvorrichtung 44 diese Soll-Werte verändert und den neu gebildeten Soll-Wert an das Schweißgerät 1 weiterleitet.

Die Bildung der einzelnen Stromimpulse bzw. "Logisch 1 "-Pegel erfolgt dabei derartig, daß durch das Schließen des schaltbaren Bauelementes 39 der parallelgeschaltete Widerstand 59 kurzgeschlossen wird, sodaß sich der Gesamtwiderstandswert zwischen den beiden Eingängen 33, 35 verändern wird und somit eine Stromerhöhung bei konstant gehaltener Spannung eintritt und somit die digitalen Pegel 57 erzeugt werden können. Diese digitalen Pegel 57 werden von den beiden Erfassungsvorrichtungen 31, 40 erkannt, sodaß eine Auswertung durchgeführt werden kann.

Durch den bidirektionalen Datenaustausch wird in vorteilhafter Weise auch erreicht, daß durch Verändern eines Soll-Wertes das Schweißgerät 1, insbesondere die Steuervorrichtung 4, überprüfen kann, ob durch diese Veränderung weitere Schweißparameter ebenfalls verändert werden müssen. Ist dies beispielsweise der Fall, so kann von der Steuervorichtung 4 dies durch eine Datenübertragung an die Fernreglereinheit 23 dem Benutzer mitgeteilt bzw. angezeigt werden, d.h., daß beispielsweise bei einem bestimmten Schweißverfahren durch Veränderung eines Schweißparameters, beispielsweise der Schweißdrahtgeschwindigkeit, ebenfalls die Stromhöhe zum Erreichen der selben Abschmelzleistung verändert werden muß, wodurch bei einer derartigen Einstellung von der Steuervorrichtung 4 des Schweißgerätes 1 an die Fernreglereinheit 23 ein derartiges Datenprotokoll übersandt wird, worauf die Logikeinheit 41 nach Auswertung dieses Datenprotokolles an der Anzeigevorrichtung 47 den Benutzer darauf hinweist, daß durch diese Veränderung der Schweißdrahtgeschwindigkeit die Stromhöhe ebenfalls verändert werden muß. Diese Veränderung kann in einfacher Form an der optischen Anzeigevorrichtung 47 angezeigt werden. Selbstverständlich ist es möglich, daß durch Ansteuerung eines Lautsprechers oder einer Warnsignalanlage bzw. Leuchte der Benutzer akkustisch oder optisch auf eine Fehleinstellung hingewiesen wird. Der Benutzer hat somit die Möglichkeit, diese Fehleinstellung beispielsweise durch Erhöhen des Stromes zu korrigieren. Durch diese Art des bidirektionalen Datenaustausches wird erreicht, daß der Benutzer Probeschweißungen nach einer Veränderung eines Schweißparameters durchführen muß. Weiters besteht die Möglichkeit, daß dem Benutzer Zusatzinformationen übertragen werden können.

Grundsätzlich kann nunmehr gesagt werden, daß aufgrund der digitalen Datenübertragung von der Fernreglereinheit 23 zum Schweißgerät 1 eine Vielzahl von unterschiedlichen Schweißparametern über die Fernreglereinheit 23 verändert werden können.

Hierzu ist es nämlich möglich, daß beispielsweise die Einstellorgane 48 bis 50 in Kombination zueinander verwendet werden, wodurch durch derartige Einstellorgane 48 bis 50 insgesamt sechzehn unterschiedliche Schweißparameter mit nur drei Einstellorganen 48 bis 50 hinterlegt bzw. angewählt werden können, d.h., daß zu den sechzehn möglichen Einstellungen in der Fernreglereinheit 23 entsprechende Daten in der Logikeinheit 41, insbesondere in einer dieser zugeordneten Speichervorrichtung hinterlegt sind, sodaß durch Aufruf einer Möglichkeit die Logikeinheit 41 den hinterlegten Schweißparameter von der Speichervorrichtung herunterlädt und anschließend an der Anzeigevorrichtung 47 anzeigt.

Gleichzeitig wird von der Logikeinheit 41 ein entsprechendes Datenprotokoll an das Schweißgerät 1 übersandt, in dem die Logikeinheit 41 der Steuervorrichtung 4 mitteilt, daß zu dem eingestellten Schweißparameter der Soll-Wert von der Steuervorrichtung 4 an die Logikeinheit 41 übersandt wird. Anschließend wird von der Steuervorrichtung 4 der hinterlegte Soll-Wert bzw. eingestellte Soll-Wert über ein entsprechendes Datenprotokoll durch Ansteuern des Leistungsteils 4 zur Bildung derartiger Stromimpulse bzw. Pegel 57 übersandt, sodaß über die Erfassungsvorrichtung 40 die Logikeinheit 41 den übersandten Soll-Wert auswerten kann. Dieser Soll-Wert wird anschließend bzw. gleichzeitig mit dem hinterlegten Schweißparameter an der Anzeigevorrichtung 47 angezeigt, wodurch der Benutzer nunmehr erkennen kann, daß beispielsweise durch den Buchstaben "I" die Stromhöhe einzustellen ist und durch den Wert, beispielsweise "250" die Stromstärke von 250 Ampere eingestellt ist und somit vom Benutzer eine Änderung des vorgegebenen Soll-Wertes vorgenommen werden kann, der anschließend wieder an das Schweißgerät 1 übersandt wird und als neuer Soll-Wert in einer Speichervorrichtung für die Steuervorrichtung 4 hinterlegt wird.

Weiters besteht durch die serielle Datenübertragung die Möglichkeit, daß eine unbegrenzte Anzahl von Daten, insbesondere von aufeinanderfolgenden Pegel 57, übertragen werden können, sodaß beispielsweise die Möglichkeit besteht, von der Fernreglereinheit 23 eine in dieser gespeicherte, benutzerdefinierte Schweißeinstellung für das Schweißgerät 1 zu übertragen, sodaß ein vollständiges Umstellen des Schweißgerätes 1 auf ein neues Schweißverfahren möglich ist.

Es besteht auch die Möglichkeit, daß die Fernregelereinheit 23 keine Intelligenz aufweist, sondern daß die Intelligenz von der Steuervorrichtung 4 des Schweißgerätes 1 bzw. der Stromquelle 2 übernommen wird. Dabei ist die Logikeinheit 41 derartig ausgebildet, daß diese nur die Ansteuerung des schaltbaren Bauelementes 39 und der Anzeigevorrichtung 47 durchführen kann. Dies ist deshalb möglich, da durch den bidirektionalen Datenaustausch zwischen der Fernreglereinheit 23 und dem Schweißgerät 1 die Berechnungen und von der Logikeinheit 41 nur die Anzeige der übertragenen Daten durchgeführt wird. Bei Betätigung eines Einstellorganes 48 bis 50 oder der Einstellvorrichtung 44 wird lediglich ein bestimmtes Datenprotokoll übertragen, sodaß von der Steuervorrichtung 4 die Berechnung und Zuordnung des Datenprotokolls übernommen wird. Der Vorteil einer derartigen Lösung liegt darin, daß eine kostengünstige Herstellung der Fernreglereinheit 23 möglich ist. Weiters wird erreicht, daß aufgrund der Ausgliederung der Intelligenz der Fernreglereinheit 23 in die Steuervorrichtung 4 eine einfache Wartung in bezug auf die hinterlegten Softwareprogramme möglich ist, da gleichzeitig mehrere Fernreglereinheiten 23, insbesondere deren Softwareprogramme bzw. Betriebsprogramme, über die Steuervorrichtung gewartet werden können.

Selbstverständlich ist es möglich, daß durch die serielle Datenübertragung in Form eines Datenprotokolles jedes beliebige aus dem Stand der Technik bekannte Datenprotokoll verwendet werden kann. Hierzu ist es auch möglich, daß die Fernreglereinheit 23 auf jedes beliebige Datenprotokoll angepaßt werden kann, wobei dazu lediglich eine Softwareanpassung an das neue Datenprotokoll durchgeführt werden muß.

Der Ordnung halber sei abschließend darauf hingewiesen, daß zum besseren Verständnis des Aufbaus der Fernreglereinheit 23 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1, 2, 3, 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Versorgungsleitung
- 19: Kühlkreislauf
- 20: Strömungswächter

- 21: Wasserbehälter
- 22: Ein- und/oder Ausgabevorrichtung
- 23: Fernreglereinheit
- 24: Inverterstromquelle
- 25: Datenbus

- 26: Mikroprozessorsteuerung
- 27: Leitungen
- 28: Leitungen
- 29: Anschlußbuchsen
- 30: Anschlußbuchsen

- 31: Erfassungsvorrichtung
- 32: Elektrodenhalter
- 33: Eingang
- 34: Elektrodenhalter
- 35: Eingang

- 36: Verbindungsleitung
- 37: Schaltvorrichtung
- 38: Widerstand
- 39: schaltbares Bauelement
- 40: Erfassungsvorrichtung

- 41: Logikeinheit
- 42: Steuerleitung
- 43: Leitung
- 44: Einstellvorrichtung
- 45: Leitung

- 46: Stromversorgungseinheit
- 47: Anzeigevorrichtung
- 48: Einstellorgan
- 49: Einstellorgan
- 50: Einstellorgan

- 51: Höhe
- 52: Zeitdauer
- 53: Zeitpunkt
- 54: Stromhöhe
- 55: Einstellorgan

- 56: Zeitpunkt
- 57: Pegel
- 58: Datenprotokoll
- 59: Widerstand

## Patentansprüche

1. Verfahren für einen Datenaustausch zwischen einer externen Komponente, insbesondere einer Fernreglereinheit (23), und einem Schweißgerät (1), insbesondere einer Stromquelle (2), wobei ein serieller Datenaustausch zwischen einem Schweißgerät (1), insbesondere einer Fernreglereinheit (23), direkt über die Schweißleitungen, insbesondere über die Verbindungsleitungen (36) zum Schweißbrenner (10) und zum Werkstück (16), mit digitalen Pegeln (57) durchgeführt wird, **dadurch gekennzeichnet, daß** zwischen dem Schweißgerät, insbesondere der Stromquelle, und der externen komponente, insbesondere der Fernreglereinheit, ein bidirektionaler Datenaustausch durchgeführt wird, daß die externen Komponënte ein Schaltbares Bauelement und einen parallel zum schaltbaren Bauelement angeordneten wirderstand (59) µmfaßt, wobei ein ständiger Stromfluß zwischen den beiden Eingängen der externer komponente über die Schaltvorrichtung der Fernreglereinheit gebildet wird und die Bildung der digitalen Pegel bzw. Stromimpulse derart erfolgt, daß durch Schließen des schaltbaren Bauelementes der widerstand (59) kurzgeschlossen wird, so daß ein Gesamtwiderstandswert zwischen den beiden Eingängen der externer komponente verändert wird.

2. Verfahren nach Anspruch 1, **dadurch gekennzeichnet, daß** der Datenaustausch durch ein Datenprotokoll (58) erfolgt, wobei die einzelnen aufeinander folgenden digitalen Pegeln (57) von einer Erfassungsvorrichtung (31, 40) aufgenommen werden.

3. Verfahren nach Anspruch 1 oder 2, **dadurch gekennzeichnet, daß** die aufgenommenen digitalen Pegel (57) von der Erfassungsvorrichtung (31, 40) an eine Steuer- vorrichtung (4) und/oder eine Logikeinheit (41) weitergeleitet werden, die anschließend die Auswertung des seriell übersandten Datenprotokolls (58) durchführt und entsprechend der übermittelten Daten einen Regel- und/oder Steuervorgang einleitet.

4. Verfahren nach einem oder mehreren der vorhergehenden Ansprüche, **dadurch gekennzeichnet, daß** beim Aktivieren des schaltbaren Bauelementes ein zu diesem parallelgeschalteter Widerstand kurzgeschlossen wird.

5. Verfahren nach einem oder mehreren der vorhergehenden Ansprüche, **dadurch gekennzeichnet, daß** das Datenprotokoll (58) durch definierte aufeinander folgende Pegel (57) aufgebaut wird, wobei ein digitaler Pegel (57), welcher ein Bit darstellt, durch eine Zeitdauer (52) definiert wird.

6. Verfahren nach einem oder mehreren der vorhergehenden Ansprüchen, **dadurch gekennzeichnet, daß** in der Fernreglereinheit (23) durch Aktivierung eines schaltbaren Bauelementes (39) ein Stromkreis über zumindest eine vordefinierte Zeitdauer (52) und eine vordefinierte Stromhöhe (54) zwischen den Eingängen (33, 35) der Fernreglereinheit (23) aufgebaut wird.

7. Fernreglereinheit für ein Schweißgerät (1) oder eine Stromquelle (2), wobei die Fernreglereinheit (23) zumindest eine Einstellvorrichtung (44) und eine Stromversorgungseinheit (46) aufweist und zum Aktivieren der Fernreglereinheit (23) diese über je einen Eingang (33, 35) mit einem Werkstück (16) und einem Elektrodenhalter kontaktiert ist, wobei in der Fernreglereinheit eine digital programmierbare Logikeinheit angeordnet ist, wobei diese mit einer Schaltvorrichtung, die zumindest aus einem Widerstand und einem schaltbaren Bauelement gebildet ist, zum Erzeugen digital aufeinanderfolgender Pegel verbunden ist, die mit dem Eingang für die Elektrodenhalterung auf dem Werkstück verbunden ist, **dadurch gekennzeichnet, daß** parallel zu dem schaltbaren Bauelement (39) ein weiterer Widerstand (59) zur Bildung eines ständigen Stromflusses in der Schaltvorrichtung (37) angeordnet ist.

8. Fernreglereinheit nach Anspruch 7, **dadurch gekennzeichnet, daß** die digital programmierbare Logikeinheit (41) durch eine Mikroprozessorsteuerung gebildet ist.

9. Fernreglereinheit nach Anspruch 7 oder 8, **dadurch gekennzeichnet, daß** die Schaltvorrichtung (37) durch zumindest einen Widerstand (38, 59) und ein schaltbares Bauelement (39), wie z.B. einen Transistor, Triac usw. gebildet ist.

10. Fernreglereinheit nach einem oder mehreren der Ansprüche 7 bis 9, **dadurch gekennzeichnet, daß** in der Fernreglereinheit (23), insbesondere in der Schaltvorrichtung (37), eine Erfassungsvorrichtung (31) zum Erfassen des Energieflusses, insbesondere des Stromes und/oder der Spannung, angeordnet ist.

11. Fernreglereinheit nach einem oder mehreren der Ansprüche 7 bis 10, **dadurch gekennzeichnet, daß** mit der digital programmierbaren Logikeinheit (41) die Einstellvorrichtung (44) und eine Anzeigevorrichtung (47) verbunden sind.

12. Fernreglereinheit nach einem oder mehreren der Ansprüche 7 bis 11, **dadurch gekennzeichnet, daß** mit der digitalen programmierbaren Logikeinheit (41) ein oder mehrere Einstellorgane (48 bis 50) zur Auswahl unterschiedlicher zu verändernder Schweißparameter verbunden sind.

13. Fernreglereinheit nach einem oder mehreren der Ansprüche 7 bis 12, **dadurch gekennzeichnet, daß** die Stromversorgungseinheit (46) parallel zu der Schaltvorrichtung (37) angeordnet ist, die über den Energiefluß zwischen den beiden Eingängen (33, 35) für den Elektrodenhalter (34) und das Werkstück (16) eine Betriebsspannung für die einzelnen Komponenten der Fernreglereinheit (23) erzeugt.

14. Fernreglereinheit nach einem oder mehreren der Ansprüche 7 bis 13, **dadurch gekennzeichnet, daß** die Schaltvorrichtung (37) in der Stromversorgungseinheit (46) angeordnet ist.

15. Fernreglereinheit nach einem oder mehreren der Ansprüche 7 bis 14, **dadurch gekennzeichnet, daß** in dem Schweißgerät (1) oder in der Stromquelle zumindest ein regelbares Leistungsteil (3), welches beispielsweise durch eine Inverterstromquelle (24) gebildet ist, angeordnet ist.

16. Fernreglereinheit nach einem oder mehreren der Ansprüche 7 bis 15, **dadurch gekennzeichnet, daß** in dem Schweißgerät (1) oder in der Stromquelle eine Steuervorrichtung (4), insbesondere eine Mikroprozessorsteuerung (26), angeordnet ist, die mit dem Leistungsteil (3) zum Regeln oder Steuern der Ausgangsleistung verbunden ist.

17. Fernreglereinheit nach einem oder mehreren der Ansprüche 7 bis 16, **dadurch gekennzeichnet, daß** in dem Schweißgerät (1) oder in der Stromquelle eine Erfassungsvorrichtung (31) zum Erfassen des Stromes und/oder der Spannung am Ausgang des Leistungsteils (3) angeordnet ist.

## Claims

1. Method of exchanging data between an external component, in particular a remote control unit (23) and a welding unit (1), in particular a current source (2), whereby a serial data exchange is operated between a welding unit (1), in particular a remote control unit (23), directly across the welding lines, in particular across the connecting lines (36) to the welding torch (10) and to the workpiece (16), on the basis of digital levels (57), **characterised in that** the external component comprises a switch component and a resistor (59) connected in parallel with the switch component and a two-way data exchange is operated between the welding unit, in particular a current source, and the external component, whereby a constant current flow is established between the two inputs of the external component via the switching device of the remote control unit , and the digital levels or current pulses are formed in such a way that when the switch component is closed, the resistor (59) is shortcircuited so that a total resistance value between the two inputs of the external component is changed.

2. Method as claimed in claim 1, **characterised in that** the data exchange is based on a data protocol (58), the individual data levels (57) following one after the other being detected by a detection system (31, 40).

3. Method as claimed in claim 1 or 2, **characterised in that** the digital levels (57) detected by the detection system (31, 40) are forwarded to a control system (4) and/or a logic unit (41), which then evaluates the serially transmitted data protocol (58) and activates a regulation and/or control procedure on the basis of the transmitted data.

4. Method as claimed in one or more of the preceding claims, **characterised in that** when the switch component is activated, a resistor connect in parallel therewith is shortcircuited.

5. Method as claimed in one or more of the preceding claims, **characterised in that** the data protocol (58) is made up of defined levels (57) one after the other, a digital level (57), which represents a bit, being defined by a period (52).

6. Method as claimed in one or more of the preceding claims, **characterised in that**, by activating a switch component (39), a current circuit is established in the remote control unit (23) for a least a predefined period (52) and at a predefined current rating (54) between the inputs (33, 35) of the remote control unit (23).

7. Remote control unit for a welding unit (1) or a current source (2), the remote control unit (23) having at least one setting unit (44) and a current supply unit (46), and in order to activate the remote control unit (23), it is placed in contact by means of a respective input (33, 35) with a workpiece (16) and an electrode holder, a digitally programmable logic unit being provided in the remote control unit and being connected to a switching device, comprising at least one resistor and a switch component, in order to generate levels in digital series, being in turn connected to the input for the electrode holder on the workpiece, **characterised in that** another resistor (59) is connected in parallel with the switch component (39) to form this constant current flow into the switching device (37).

8. Remote control unit as claimed in claim 7, **characterised in that** the digitally programmable logic unit (41) is provided in the form of a microprocessor controller.

9. Remote control unit as claimed in claim 7 or 8, **characterised in that** the switching device (37) comprises at least one resistor (38, 59) and a switch component (39), e.g. a transistor, triac, etc..

10. Remote control unit as claimed in one or more of claims 7 to 9, **characterised in that** a detection system (31) is provided in the remote control unit (23), in particular in the switching device (37), to detect the flow of energy, in particular the current and/or voltage.

11. Remote control unit as claimed in one or more of claims 7 to 10, **characterised in that** the setting unit (44) and a display unit (47) are connected to the digitally programmable logic unit (41).

12. Remote control unit as claimed in one or more of claims 7 to 11, **characterised in that** one or more of the setting elements (48 to 50), used to select various welding parameters to be changed, are connected to the digitally programmable logic unit (41 ).

13. Remote control unit as claimed in one or more of claims 7 to 12, **characterised in that** the current supply unit (46) is arranged parallel with the switching device (37), which generates an operating voltage for the individual components of the remote control unit (23) via the energy flow between the two inputs (33, 35) for the electrode holder (34) and the workpiece (16).

14. Remote control unit as claimed in one or more of claims 7 to 13, **characterised in that** the switching device (37) is provided in the current supply unit (46).

15. Remote control unit as claimed in one or more of claims 7 to 14, **characterised in that** an adjustable power component (3) is provided in the welding unit (1) or in the current source, which is provided in the form of an inverter current source (24), for example.

16. Remote control unit as claimed in one or more of claims 7 to 15, **characterised in that** a control system (4), in particular a microprocessor controller (26), is provided in the welding unit (1) or in the current source, which is connected to the power component (3) in order to regulate or control the output power.

17. Remote control unit as claimed in one or more of claims 7 to 16, **characterised in that** a detection system (31) is provided in the welding unit (1) or in the current source to detect the current and/or voltage at the output of the power component (3).

## Revendications

1. Procédé pour un échange de données entre un composant externe, notamment une unité de télérégulation (23), et un appareil de soudage (1), notamment une source de courant (2), où est effectué un échange de données sériel entre un appareil de soudage (1), notamment une unité de télérégulation (23), directement par les lignes de soudage, notamment par les lignes de liaison (36) au chalumeau (10) et à la pièce (16), avec des niveaux numériques (57), **caractérisé en ce qu'**il est effectué entre le chalumeau soudeur, notamment la source de courant, et le composant externe, notamment l'unité de télérégulation, un échange de données bidirectionnel, **en ce que** le composant externe comporte un élément commutable et une résistance (59) disposée parallèlement à l'élément commutable, où est formé un flux de courant permanent entre les deux entrées des composants externes par le dispositif de commutation de l'unité de télérégulation, et la formation des niveaux numériques, respectivement des impulsions de courant a lieu, de telle sorte que, par la fermeture de l'élément commutable, la résistance (59) est mise en court-circuit de sorte qu'une valeur de résistance totale entre les deux entrées des composants externes est modifiée.

2. Procédé selon la revendication 1, **caractérisé en ce que** l'échange des données a lieu par un protocole de données (58) où les niveaux numériques individuels (57) qui se suivent sont détectés par un dispositif de détection (31, 40).

3. Procédé selon la revendication 1 ou 2, **caractérisé en ce que** les niveaux numériques détectés (57) sont transmis par le dispositif de détection (31, 40) à un dispositif de commande (4) et/ou une unité logique (41) qui procède ensuite à l'évaluation du protocole de données (58) transmis en série et introduit en fonction des données transmises une opération de régulation et/ou de commande.

4. Procédé selon l'une ou plusieurs des revendications précédentes, **caractérisé en ce que** lors de l'activation de l'élément commutable, une résistance montée parallèlement à celui-ci est mise en court-circuit.

5. Procédé selon l'une ou plusieurs des revendications précédentes, **caractérisé en ce que** le protocole de données (58) est construit par des niveaux définis successifs (57), où un niveau numérique (57), qui représente un élément binaire, est défini par une durée de temps (52).

6. Procédé selon l'une ou plusieurs des revendications précédentes, **caractérisé en ce qu'**il est établi dans l'unité de télérégulation (23), par l'activation d'un élément commutable (39), un circuit sur au moins une durée de temps prédéfinie (52) et une hauteur de courant prédéfinie (54) entre les entrées (33, 35) de l'unité de télérégulation (23).

7. Unité de télérégulation pour un appareil de soudage (1) ou une source de courant (2), où l'unité de télérégulation (23) présente au moins un dispositif de réglage (44) et une unité d'alimentation en courant (46) et, pour l'activation de l'unité de télérégulation (23), celle-ci est mise en contact par respectivement une entrée (33, 35) avec une pièce (16) et avec un porte-électrode, où est disposée dans l'unité de télérégulation une unité logique programmable numériquement, où celle-ci est reliée à un dispositif de commutation qui est formé par au moins une résistance et un élément commutable, pour produire des niveaux numériques successifs, qui est reliée à l'entrée du porte-électrode sur la pièce, **caractérisé en ce qu'**il est disposée parallèlement à l'élément commutable (39) une autre résistance (59) pour former un flux de courant permanent dans le dispositif de commutation (37).

8. Unité de télérégulation selon la revendication 7, **caractérisée en ce que** l'unité logique programmable numériquement (41 ) est formée par une commande à microprocesseur.

9. Unité de télérégulation selon la revendication 7 ou 8, **caractérisée en ce que** le dispositif de commutation (37) est formé par au moins une résistance (38, 59) et un élément commutable (39), comme par exemple un transistor, triac, etc.

10. Unité de télérégulation selon l'une ou plusieurs des revendications 7 à 9, **caractérisée en ce qu'**il est disposé dans l'unité de télérégulation (23), notamment dans le dispositif de commutation (37), un dispositif de détection (31) pour détecter le flux d'énergie, notamment le courant et/ou la tension.

11. Unité de télérégulation selon l'une ou plusieurs des revendications 7 à 10, **caractérisée en ce que** le dispositif de réglage (44) et un dispositif d'affichage (47) sont reliés à l'unité logique programmable numériquement (41).

12. Unité de télérégulation selon l'une ou plusieurs des revendications 7 à 11, **caractérisée en ce que** sont reliés à l'unité logique programmable numériquement (41 ) un ou plusieurs organes de réglage (48 à 50) pour la sélection de différents paramètres de soudage à modifier.

13. Unité de télérégulation selon l'une ou plusieurs des revendications 7 à 12, **caractérisée en ce que** l'unité d'alimentation en courant (46) est disposée parallèlement au dispositif de commutation (37), qui produit par le flux d'énergie entre les deux entrées (33, 35) pour le porte-électrode (34) et la pièce (16) une tension de fonctionnement pour les composants individuels de l'unité de télérégulation (23).

14. Unité de télérégulation selon l'une ou plusieurs des revendications 7 à 13, **caractérisée en ce que** le dispositif de commutation (37) est disposé dans l'unité d'alimentation en courant (46).

15. Unité de télérégulation selon l'une ou plusieurs des revendications 7 à 14, **caractérisée en ce qu'**il est disposée dans l'appareil de soudage (1) ou dans la source de courant au moins une pièce de puissance réglable (3) formée par exemple par une source de courant inverseur (24).

16. Unité de télérégulation selon l'une ou plusieurs des revendications 7 à 15, **caractérisée en ce qu'**il est disposé dans l'appareil de soudage (1) ou dans la source de courant un dispositif de commande (4), notamment une commande à microprocesseur (26) qui est reliée à la partie de puissance (3) pour régler ou commander la puissance de sortie.

17. Unité de télérégulation selon l'une ou plusieurs des revendications 7 à 16, **caractérisée en ce qu'**il est disposé dans l'appareil de soudage (1) ou dans la source de courant un dispositif de détection (31) pour détecter le courant et/ou la tension à la sortie de la partie de puissance (3).
